# EUROPEAN PATENT APPLICATION

(11) **EP 3 138 612 A1**
(43) Date of publication of application: **08.03.2017**
(21) Application number: 15786010.7
(22) Date of filing: 30.04.2015
(51) Int. Cl.: A63B 69/10, A63B 22/12, A63B 23/035

(54) **SWIMMING TRAINING AND SWIMMING STROKE BICYCLE**

(30) Priority: 30.04.2014 KR 20140052643
(71) Applicant: Kim, In-Sang, Seoul 120-830 (KR)
(72) Inventor: Kim, In-Sang, Seoul 120-830 (KR)
(74) Representative: Mittler, Enrico
(86) International application number: PCT/KR2015/004368
(87) International publication number: WO 2015/167271

(57) **Abstract**

The present invention relates to a swimming training and swimming stroke bicycle capable of being ridden by applying a swimming stroke, and to a swimming training and swimming stroke bicycle capable of allowing swimming training to be carried out even when a user is not in a swimming pool and allowing a swimming stroke to be practiced and the muscular strength required for swimming to be trained since it is possible to ride the bicycle in various swimming styles such as freestyle, breaststroke, butterfly or backstroke, and capable of allowing a bicycle ride to be enjoyed without boredom since a bicycle can be ridden in new and various styles.

## Description

### Technical Field

The present invention relates to a swimming training and swimming stroke bicycle capable of being ridden by applying a swimming stroke, and to a swimming training and swimming stroke bicycle capable of allowing swimming training to be carried out even when a user is not in a swimming pool and allowing a swimming stroke to be practiced and the muscular strength required for swimming to be trained since it is possible to ride the bicycle in various swimming styles such as freestyle, breaststroke, butterfly or backstroke, and capable of allowing a bicycle ride to be enjoyed without boredom since a bicycle can be ridden in new and various styles.

### Background

A bicycle, in general, is a representative tool for an aerobic exercise, and in recent years, people who are using a bicycle for the sake of health and leisure is being significantly increased.

The bicycle, in general, is configured to run in such a way that a rider sits on a saddle and pedals with feet in a posture where the hands hold a handle. This typical bicycle requires a uniform riding posture, thus causing boring.

### Summary of The Invention

### Technical Problem

The present invention is directed to providing a swimming training and a swimming stroke bicycle wherein different from a typical bicycle, a rider is able to ride a bicycle in such a way to pedal with feet in a posture where the hands hold a handle, the rider is able to ride in various swimming styles, for example, freestyle stroke, breaststroke, butterfly or backstroke, etc., and capable of allowing a bicycle ride to be interested and since the bicycle can be ridden in a new swimming posture, a swimming style practice and its correction are available, and as compared to a typical bicycle, the muscle strength required for a swimming can be trained.

### Technical Solution

The present invention provides a swimming training and swimming stroke bicycle, which may include, but is not limited to, a base 101; a driving part 110 which is installed at the base 101 and includes a driving crank rotated by rider's hands and is configured to drive a front wheel 116 or a rear wheel 125 in cooperation with the driving crank; and a steering part 120 which is equipped with the front wheel 116 or the rear wheel 125 and is hinged at the base 101 and is able to change the driving direction of a bicycle by steering and rotating the steering shaft.

At this time, there may further include a braking part 130 configured to brake the rotations of the front wheel 116 or the rear wheel 125.

Moreover, the driving part 110 may include a bracket 111 disposed at both sides of the base 101, wherein the bracket 111 may include chain rings 113 and 144 which are configured to rotate in cooperation with driving cranks 112 and 141; and sprockets 115 and 146 which are disposed at the front wheel 116 or the rear wheel 125 and are connected to the chain rings 113 and 144 via a chain 114 and are configured to rotate in cooperation with the chain rings 113 and 144.

In addition, the steering part 120 may include a steering footrest 121 which is engaged to the front wheel 116 or the rear wheel 125, so the steering shafts 118 and 124 can be rotated by stepping on the steering footrests 121.

Furthermore, the steering part 120 is configured in such a way that the bracket 111 wherein the driving crank 112 configured to drive the front wheel 116 or the rear wheel 125 is installed, is engaged to both side ends of the steering frame 117, and the steering shaft 118 formed in the center of the steering frame 117 is hinged at the base 101.

Moreover, there may be further include an upper body bench 104 disposed at the top of the base 101 to support a rider's upper body, wherein the height of the upper body bench 104 is adjustable; and a lower body bench 106 configured to support a rider's lower body, wherein the height of the lower body bench 106 is adjustable.

In addition, the lower body bench 106 is configured to be gradually more inclined in the direction of the rear side of the base 101.

A support bench 108 may be provided at a rear portion of the lower body bench 106, wherein the height thereof is adjustable.

Furthermore, the braking part 130 includes a brake handle 131 which protrudes upward from a front portion of the base 101 and is equipped with a brake lever, wherein the brake lever is connected via wire with a brake 132 configured to brake in such a way to press and brake the front wheel 116 or the rear wheel 125, and if the brake lever is pulled, the brake 132 brakes in such a way to press and brake the front wheel 116 or the rear wheel 125.

Moreover, the braking part 130 is configured in such a way that the brake handle 131 equipped with the brake lever is disposed in the form of one paid, and the brake lever of any one of the brake handles 131 is connected via a wire with the brake 132 which is able to press and brake the front wheel 116, and the brake lever of the other brake handle 131 is connected wire with the brake 133 which is able to press and brake the rear wheel 125.

### Advantageous Effects

Different from a typical bicycle, the swimming training and swimming stroke bicycle according to the present invention has an effective advantage wherein a rider is able to ride a bicycle in such a way to pedal with feet in a style where the hands hold a handle, the rider is able to ride in various swimming styles such as freestyle stroke, breaststroke, a butterfly or backstroke, etc, and since the bicycle can be ridden in a new and various swimming style, a swimming style practice and its correction are available, and as compared to a typical bicycle, the muscle strength required for a swimming can be trained. The present invention is able to provide a new experience and fun wherein a rider can feel as if he swims on the ground where is no water

### Brief Description of The Drawings

FIG. 1 is a front perspective view illustrating a swimming training and swimming stroke bicycle according to an exemplary embodiment of the present invention.
FIG 2 is a rear perspective view illustrating a swimming training and swimming stroke bicycle according to an exemplary embodiment of the present invention.
FIG. 3 is a side view illustrating a swimming training and swimming stroke bicycle according to an exemplary embodiment of the present invention.
FIG. 4 is a perspective view illustrating a main component of a driving part.
FIG 5 is a perspective view illustrating a main component of a steering part.
FIG. 6 is a perspective view illustrating a main component of a braking part.
FIG. 7 is a disassembled perspective view illustrating a bench part according to the present invention.
FIG. 8 is a view illustrating a state where a bicycle turns right using a steering part of the present invention.
FIG. 9 is a view illustrating a state where a bicycle turns left suing a steering part of the present invention.
FIG. 10 is a view illustrating a use state where a bicycle is used for a backstroke style.
FIG 11 is a view illustrating a use state where a bicycle is used for a butterfly stroke style.
FIG. 12 is a perspective view illustrating a swimming training and swimming stroke bicycle according to another exemplary embodiment of the present invention.
FIG 13 is a perspective view illustrating a driving part of a swimming training and swimming stroke bicycle according to another exemplary embodiment of the present invention.

### Description of symbols on main components in the drawings

- 101: Base: 102: Bench fixing part
- 103: Bench support part: 104: Upper body bench
- 105: Bench support part: 106: Lower body bench
- 107: Bench support part: 108: Support bench
- 109: Fixing pin: 110: Driving part
- 111: Bracket: 112: Driving crank
- 112a: Driving handle: 113: Chain ring
- 114: Chain: 115: Sprocket
- 116: Front wheel: 117: Steering frame
- 118: Steering shaft: 120: Steering part
- 121: Steering footrest: 122: First steering gear
- 123: Second steering gear: 124: Steering shaft
- 125: Rear wheel: 130: Braking part
- 131: Brake handle: 132: Brake
- 133: Brake: 141: Driving crank
- 141a: Driving handle: 142: Gear
- 143: Bevel gear: 144: Chain ring
- 145: Chain: 146: Sprocket

### Modes for carrying out the invention

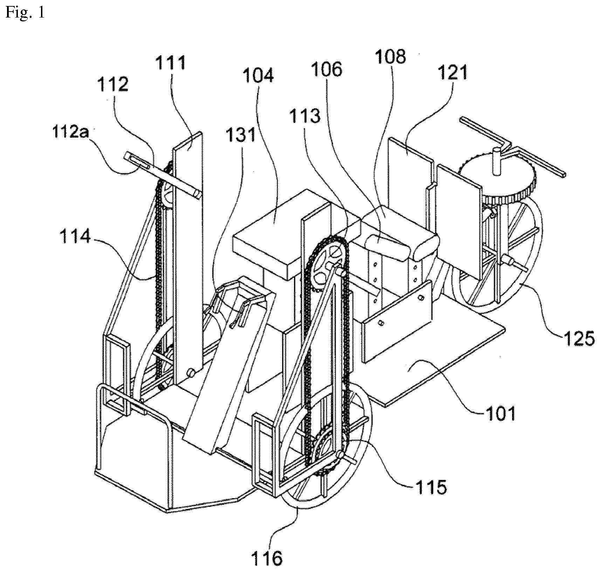

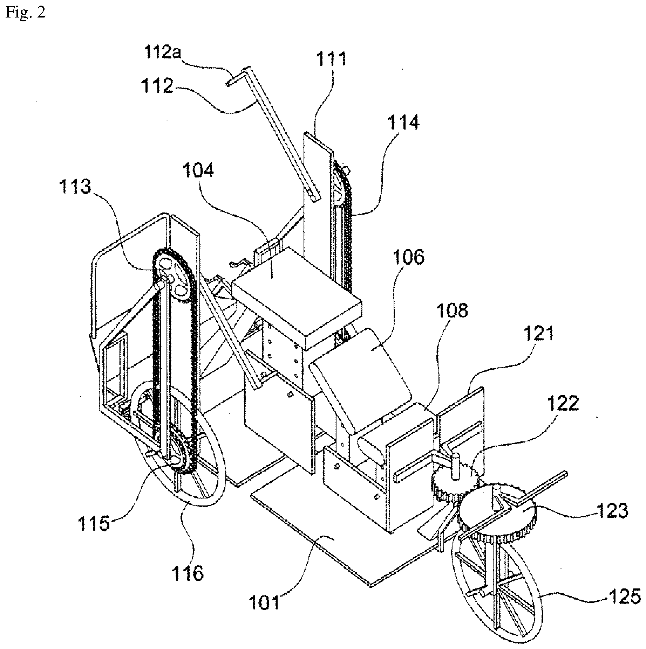

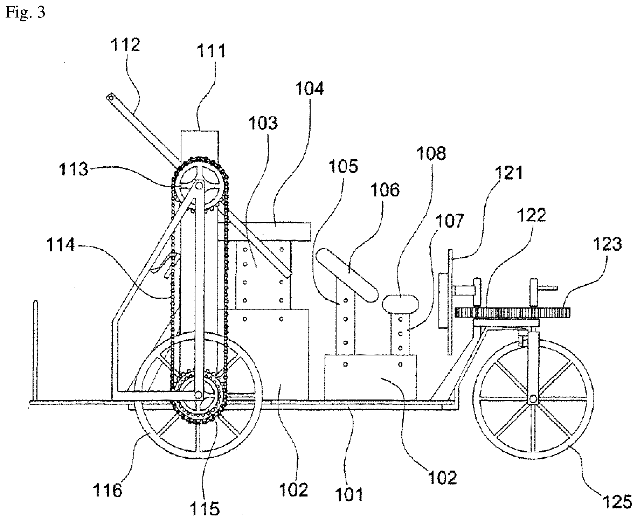

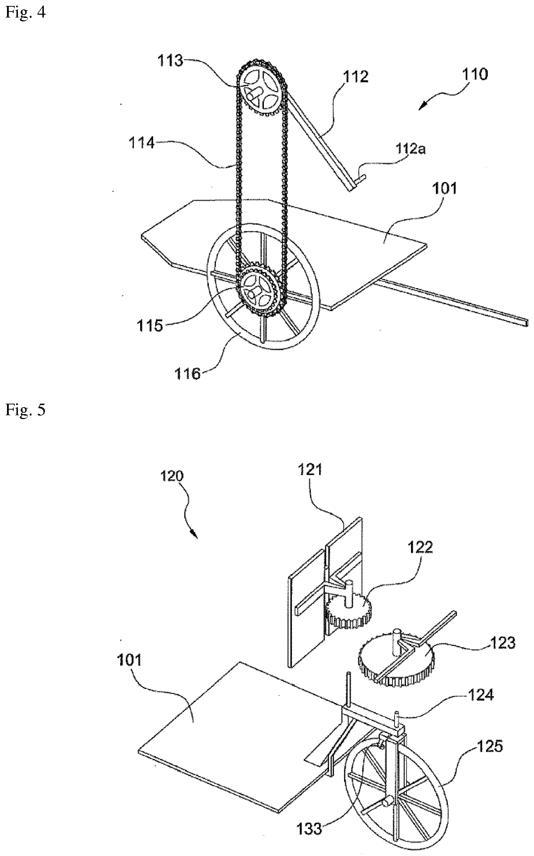

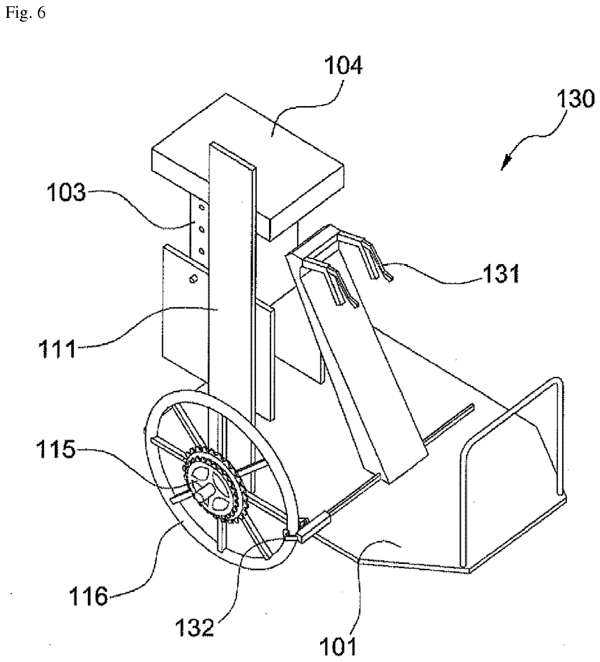

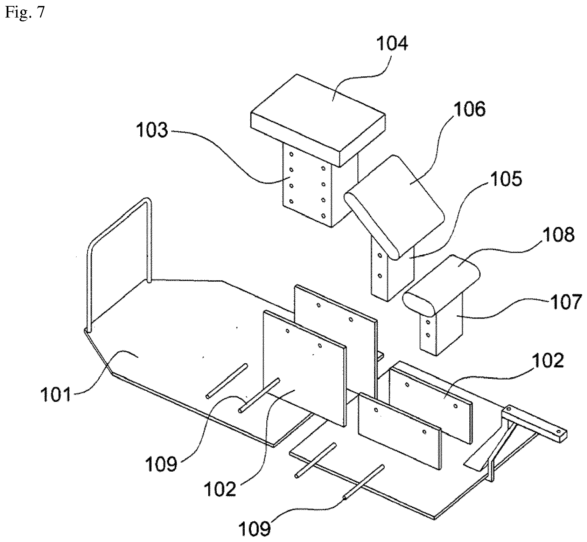

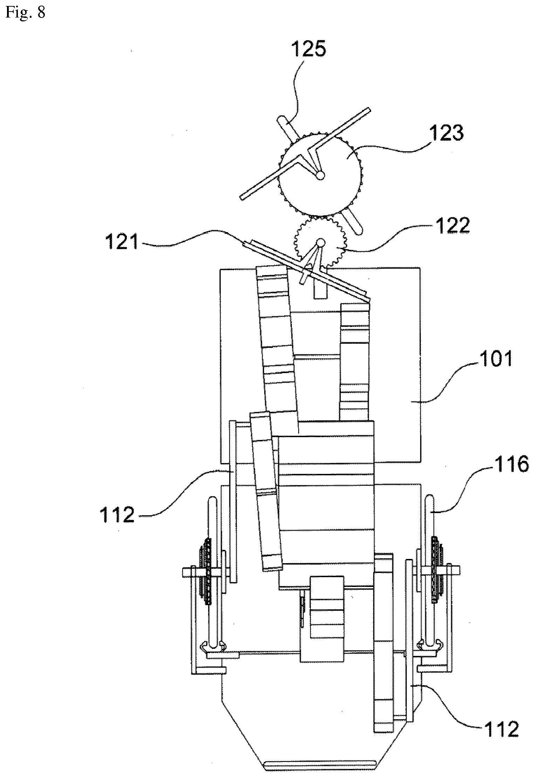

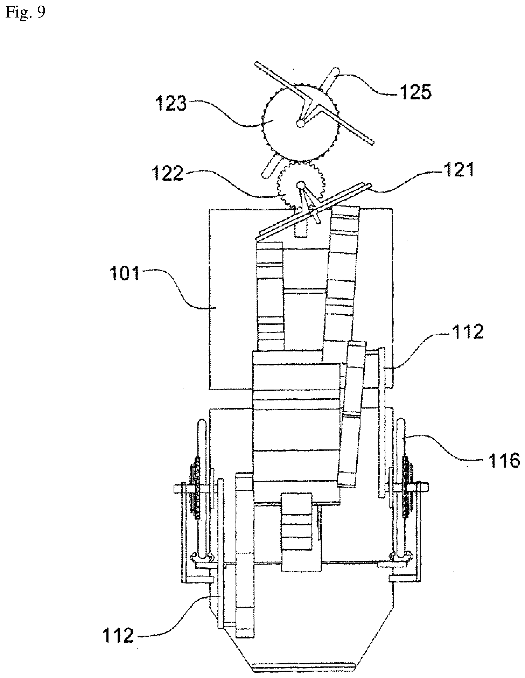

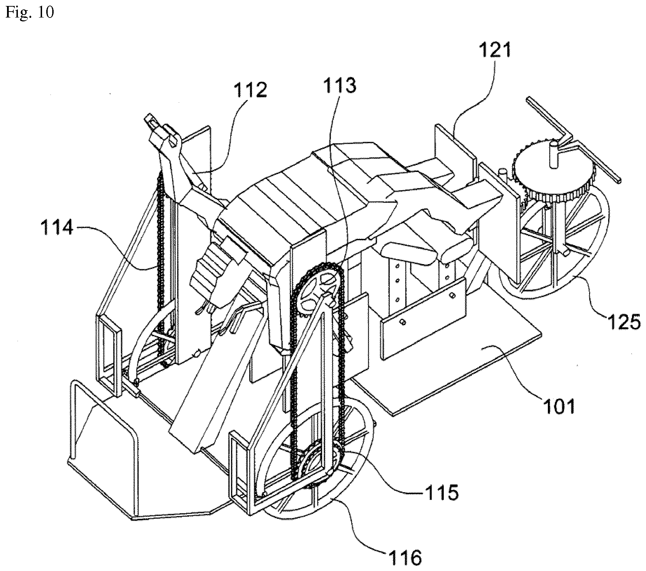

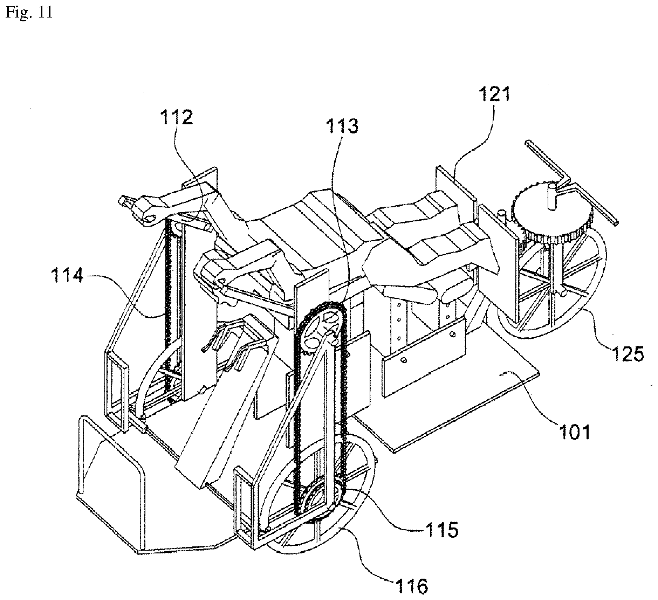

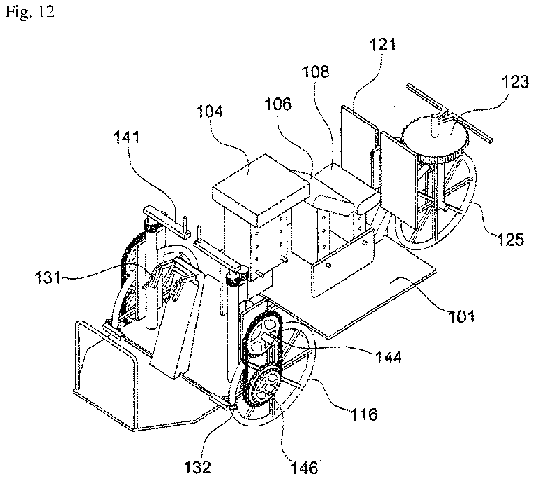

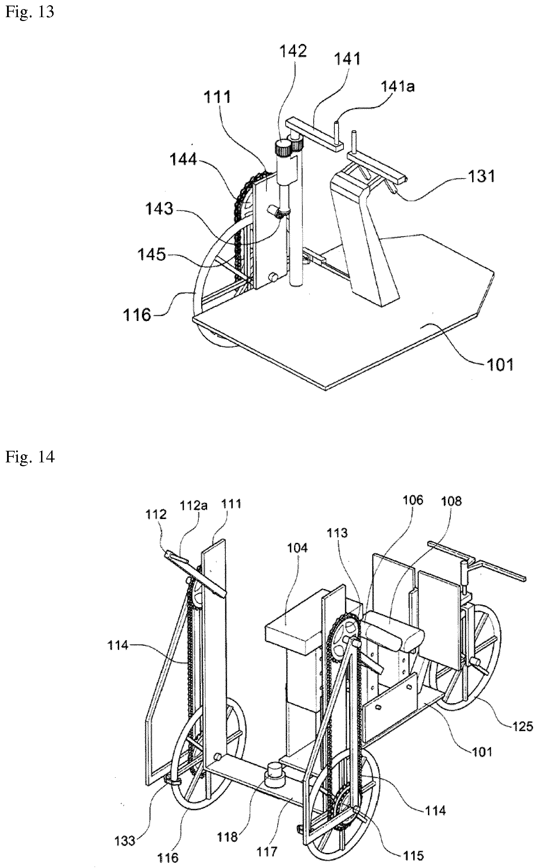

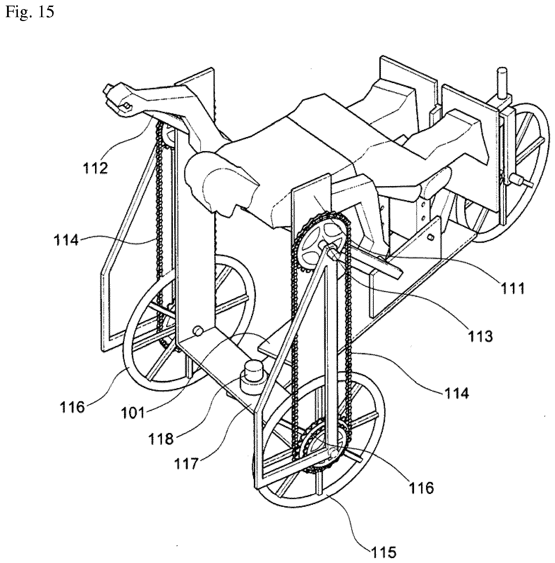

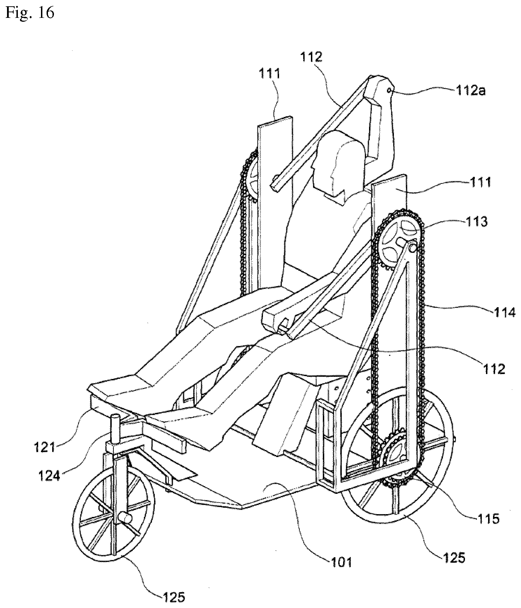

FIG. 1 is a front perspective view illustrating a swimming training and swimming stroke bicycle according to an exemplary embodiment of the present invention. FIG. 2 is a rear perspective view illustrating a swimming training and swimming stroke bicycle according to an exemplary embodiment of the present invention. FIG. 3 is a side view illustrating a swimming training and swimming stroke bicycle according to an exemplary embodiment of the present invention. FIG 4 is a perspective view illustrating a main component of a driving part. FIG. 5 is a perspective view illustrating a main component of a steering part. FIG. 6 is a perspective view illustrating a main component of a braking part. FIG. 7 is a disassembled perspective view illustrating a bench part according to the present invention. FIG. 8 is a view illustrating a state where a bicycle turns right using a steering part of the present invention. FIG. 9 is a view illustrating a state where a bicycle turns left using a steering part of the present invention. FIG. 10 is a view illustrating a use state where a bicycle is used for a backstroke posture. FIG. 11 is a view illustrating a use state where a bicycle is used for a butterfly stroke posture. FIG. 12 is a perspective view illustrating a swimming training and swimming stroke bicycle according to another exemplary embodiment of the present invention. FIG. 13 is a perspective view illustrating a driving part of a swimming training and swimming stroke bicycle according to another exemplary embodiment of the present invention. FIG. 14 is a perspective view illustrating a swimming training and swimming stroke bicycle according to further another exemplary embodiment of the present invention. FIG. 15 is a view illustrating a use state of a swimming training and swimming stroke bicycle in FIG. 14. FIG. 16 is a perspective view illustrating a swimming training and swimming stroke bicycle according to still further another exemplary embodiment of the present invention.

Referring to FIGS. 1 to 3, the swimming training and swimming stroke bicycle according to an exemplary embodiment of the present invention may include a bench which is disposed at the top of a base 101 which is referred to a frame, wherein a rider is able to lie face down or lie on the bench, a driving part which is provided at a front portion of the base 101 and is able to provide a driving force, and a steering part which is disposed at a rear portion of the base 101 and is able to steer a bicycle.

The driving part 110 disposed at a front portion of the base 101 is able to generate a driving force to a bicycle, thus rotating a front wheel 116 disposed at a front portion of the base 101, by which the bicycle can be driven.

Referring to FIGS. 1 to 4, the driving part 110 may include a driving crank 112 disposed at an inner side of the top of a bracket 111 which protrudes upward in the vertical direction at both front sides of the base 101, and the driving crank 112 allows to rotate a driving handle 112a with hands, and the driving crank 112 is connected coaxial with a chain ring 113 disposed at the outer side of the top of the bracket 111.

The driving handle 112a may be configured to be freely rotated with respect to the driving crank 112, so the user can comfortably rotate the driving crank 112 when the user rotates the driving crank 112 while holding the driving handle 112a.

The chain ring 113 may be connected to a sprocket 115 formed integral with the front wheel 116 below the bracket 111, and connected a chain 114.

As mentioned above, constituted driving part 110 is disposed at both front sides of the base 101. When the user sits on the bench as if he lies face down or lies thereon and holds the driving handle 112a of the driving part 110 with hands and rotates the driving crank 112, the chain ring 113 may be rotated in cooperation with the driving crank 112 due to the rotation of the chain ring 113, and as the chain ring 113 rotates, the sprocket 115 connected with the chain 114 can rotate, and the front wheel 116 rotates, by which the bicycle can be driven.

A free wheel or a free hub, in general, is built in the sprocket 115, by which the driving direction of the gear may be set only in one direction. It can be rotated only when the front wheel 116 is driven forward.

Moreover, the sprocket 115 may be configured in a multi-stage using the sprockets having different diameters. A typical transmission allowing the chain 114 to be selectively engaged with any of the multi-stage sprockets 115, may be adapted, thus variously changing the speed.

If the left and right driving parts 110 are configured to drive the left and right wheels 116, the rotation speeds of the left and right wheels may be changed by the force and speed that the hands and arms rotate the left and right cranks 112, by which the steering effect of the bicycle can be obtained.

A steering part 120 may be provided at a rear portion of the base 101 of the bicycle so as to adjust the steering direction of the bicycle.

Referring to FIGS. 1 to 3 and 5, the steering part may include a first steering gear 122 which is inserted in a vertical shaft (not illustrated) disposed at a rear portion of the base 101, wherein the first steering gear 122 may be engaged with a second steering gear 123 disposed integral with the steering shaft 124 which supports the rear wheel 125.

The shaft of the first steering gear 122 may be formed integral with the steering footrest 121.

If the rider sits on the bench and contact his feet close to the steering footrests 121 and rotate the steering footrests 121 using feet, the steering footrests 121 rotate the first steering gear 122 and the second steering gear 123, thus rotating the steering shaft 124. The rear wheel 125 engaged integral with the steering shaft 124 can rotate, thus adjusting the driving direction of the bicycle.

According to an exemplary embodiment of the present invention, the steering part 120 is configured for the rider to step on the steering footrests 121, thus steering the rear wheel 125. The first steering gear 122 and the second steering gear 123 are configured to be tooth-engaged with each other so that the bicycle can rotate in the direction where the user steps on the steering footrests 121. Alternatively, the steering footrests 121 may be formed integral with the second steering gear 123, so the rear wheel 125 can be steered in the opposite direction that the rider steps on the steering footrests 121.

The bicycle of the present invention can be driven through the driving part 110, and the steering direction of the bicycle can be changed through the steering part 120, and the braking part 130 is able to brake the bicycle which is being driven.

Referring to FIGS. 1 to 3 and 6, the braking part 130 may include a pair of left and right brake handles 131 which protrude upward at a height similar with the height where the rider lies face down, at a front portion of the base 101, a brake lever (not illustrated) formed integral with the brake handle 131, and a brake 132 which is able to brake the rotation of the front wheel 116 by pressing and braking the front wheel 116 as in FIG. 6.

Referring to FIG. 5, a brake 133 may be disposed at the rear wheel 125 so as to brake the rotation of the rear wheel 125 by pressing and braking the rear wheel 125.

A pair of the brake handles 131 and the brake lever are connected with the brake 132 of the front wheel 116 and the brake 133 of the rear wheel 125 via a wire. If the rider pulls the lever of the brake handle 131, the brake 132 of the front wheel 116 or the brake 133 of the rear wheel 125 will become activated and brake the front wheel 116 or the rear wheel 125, thus braking the bicycle.

Referring to FIGS. 1 to 3, the braking part 130 of the present invention is configured to brake the bicycle through the brake handle 131 and the lever disposed at a front portion of the base 101. Alternatively, the braking part may be configured in such a way to install the brake lever at the driving handles 112a held by the rider.

Referring to FIGS. 3 and 7, the bench on which the rider lies face down or lies, may include an upper body bench 104 disposed at an intermediate portion of the base 101, a lower body bench 106 and a support bench 108.

The upper body bench 104, the lower body bench 106 and the support bench 108 are able to support each portion of the rider's body so as to allow the rider to sit on the bicycle and ride the bicycle in the postures, such as freestyle stroke, breaststroke, backstroke, and butterfly stroke etc.

The bench support part 103 disposed below the upper body bench 104, the bench support part 105 disposed below the lower body bench 106 and the bench support part 107 disposed below the support bench 108 may be fixed using a fixing pin 109 at the bench fixing part 102 disposed on the top of the base 101. Holes may be perforated at regular intervals at the bench support parts 103, 105 and 107. The fixing pin 109 can be selectively and fixedly inserted into the holes, so the heights of the upper body bench 104, the lower body bench 106 and the support bench 108 can be adjusted to the rider's body style.

The upper body bench 104 is able to support the rider's upper body, and the lower body bench 106 is able to support the rider's lower legs (thighs, etc.), and the support bench 108 is able to support the rider's lower legs (knees and ankles) which are assigned to adjust the steering part 120.

Referring to FIGS. 1 to 3, the lower body bench 106 may be configured in such a way that the angle thereof can be adjusted for the lower body bench 106 to be gradually more inclined downward in the direction of the rear side of the base 101, whereby the rider's lower body can be supported to match with the swimming posture wherein the rider may ride face down or lies on the bench.

In the swimming training and swimming stroke bicycle according to the present invention, the rider may lie face down on the bench or lies on the bench, and the rider holds the driving handles 112a with his hands, and then rotates the driving crank 112, so the front wheel 116 rotates, and the bicycle can be driven.

If the rider presses the steering footrests 121 in the direction that the rider wants to turn while driving the bicycle, as illustrated in FIGS.8 and 9, the first steering gear 122 formed integral with the steering footrest 121 rotates, and the second steering gear 123 tooth-engaged with the first steering gear 122 rotates, and the rear wheel 125 driven in cooperation with the second steering gear 123 rotates, thus changing the driving direction.

As mentioned above, constituted present invention may allow a rider to ride a bicycle in various styles. Referring to FIG. 10, the rider may lie face up on the bench like a backstroke posture while looking up the sky and hold the driving handles 112a and rotate the driving cranks 112, so the rider can ride the bicycle while adjusting the driving direction by steering the steering footrests 121 with feet.

As illustrated in FIG. 11, the rider may lie face down on the bench in the direction of the ground and hold the driving handles 112a and rotate the driving cranks 112, so the rider can ride the bicycle while adjusting the driving direction by steering the steering footsteps 121 with feet.

In the posture illustrated in FIG. 11, the rider may take a posture of a freestyle stroke or a butterfly stroke in swimming and may enjoy both the swimming training and the bicycle riding.

FIG. 12 is a perspective view illustrating a swimming training and swimming stroke bicycle according to another exemplary embodiment of the present invention.

The another exemplary embodiment of the present invention has the same configurations as the steering part 120, the braking part 130 and the bench of an exemplary embodiment of the present invention illustrated in FIGS. 1 to 3 except for the different configuration of the driving part 110.

In the above another exemplary embodiment of the present invention, the driving part 110 is disposed separate for the sake of a breaststroke training.

Referring to FIGS. 12 and 13, the driving part of the swimming training and swimming stroke bicycle according to another exemplary embodiment of the present invention may include a driving crank 141 which protrudes upward from the base to match with the position of a rider's arm, wherein the driving crank 141 may be configured to be rotated in such a way to rotate the driving handle 141a with hands. A gear 142 is provided, which rotates in cooperation with the driving crank 141. The gear 142 may be tooth-engaged with a bevel gear 143 disposed below the same. The bevel gear 143 may be equipped with a chain ring 144 at the outer side of the bracket 111. If the rider rotates the driving crank 141 in the horizontal direction, the chain ring 144 disposed at the outer side of the bracket 111 will rotate.

The chain ring 144 is able to drive the sprocket 146 formed integral with the front wheel 116 and rotate the front wheel 116, by which the bicycle can be driven.

In the above another exemplary embodiment of the present invention, it is configured so that the driving crank 141 can be rotated in the horizontal direction, which may allow the rider to ride a bicycle while training a breaststroke style in various swimming styles.

In the swimming training and swimming stroke bicycle according to the present invention, the front wheel is driven by the driving part 110, and the steering part 120 is disposed at the rear wheel 125. As illustrated in FIG. 14 according to another exemplary embodiment of the present invention, both the driving part 110 and the steering part 120, alternatively, may be disposed at the front wheel 116.

As illustrated in FIG. 14, the steering frame 117 may be engaged to a front portion of the base 101 via the steering shaft 118, so the steering frame 117 can rotate about the steering shaft 118.

The front wheel 116 may be engaged to both sides of the steering frame 117, and the front wheel 116 can be driven by the driving part 110.

The configuration of the driving part 110 adapted to drive the front wheel 116 is same as the previously described an exemplary embodiment of the present invention.

Referring to FIG. 15, in the swimming training and swimming stroke bicycle according to the present invention, if a rider lies on the upper body bench 104 and the lower body bench 106 and holds the driving handles 112a with hands, and rotates the driving crank 112, the chain ring 113 connected with the driving crank 112 will rotate, and the sprocket 115 will be rotated through the chain 114, so the sprocket 115 will drive the front wheel 116.

More specifically, the rider may drive the front wheel 116 by rotating the driving crank 112 using the driving handles 112a, and may rotate the steering frame 117 about the steering shaft 118, thus changing the driving direction of the bicycle.

Referring to FIG. 16, the steering part 120 may be provided at the front wheel 116 of the bicycle, and the driving part 110 may be provided at the rear wheel 125.

As illustrated in FIG. 16, the sprocket 115 of the rear wheel 125 and the chain ring 113 of the bracket 111 are connected the chain 114 and are driven, and the chain ring 113 is connected with the driving crank 112. If the rider holds the driving handles 112a of the driving crank 112 and rotates it, the driving part 110 will drive the rear wheel 125.

Referring to FIG. 16, the steering shaft 124 may be hinged at a front portion of the base 101, and the front wheel 116 may be provided at the steering shaft 124, and the steering footrest 121 may be provided at the top of the steering shaft 124, wherein the rider is able to drive the rear wheel with hands, and adjust the steering footrests 121 with feet, thus changing the driving direction of the bicycle.

Different from a typical bicycle wherein a rider rides a bicycle in such a way to pedal while holding the handle with both hands, the swimming training and swimming stroke bicycle according to the present invention is able to provide an effective advantage in the way that the rider can ride the bicycle in various swimming postures, for example, a freestyle stroke, a breaststroke, a butterfly stroke or backstroke, etc. Since the rider can use the bicycle in various new swimming postures, thus providing a swimming posture practice and building up the muscles necessary for swimming. The present invention is able to provide a new experience and fun wherein a rider can feel as if he swims on the ground which has no water.

So far, the swimming training and swimming stroke bicycle according to the present invention has been described.

It should be understood that the technical configuration of the present invention could be implemented in another specific form by a person having ordinary skill in the art without departing from the technical concepts and necessary features.

For example, the lengths and shapes of the driving crank and the driving handle of the bicycle, the distance between the crank shaft and the bench and the distance and angle between the bench and the steering footrests may be changed in response to the body style of a rider who uses the swimming training and swimming stroke bicycle of the present invention, and alternatively, the lengths, dimensions, angles and designs of the components which form the swimming training and swimming stoke bicycle of the present invention may be changed.

For this reason, it should be understood that the above-described technical exemplary embodiments are provided for illustrative purposes in all aspects, not limiting them, and the right scope of the present invention should be defined by the claims rather than the descriptions, and all the changes or modified forms which may be derived from the meaning and scope of the claims and their equivalents should be interpreted as being included in the scope of the present invention.

## Claims

1. A swimming training and swimming stroke bicycle, comprising:
a base (101);
a driving part (110) which is installed at the base (101) and includes a driving crank rotated by rider's hands and is configured to drive a front wheel (116) or a rear wheel (125) in cooperation with the driving crank; and
a steering part (120) which is equipped with the front wheel (116) or the rear wheel (125) and is hinged at the base (101) and is able to change the driving direction of a bicycle by steering and rotating the steering shaft.

2. The bicycle of claim 1, further comprising a braking part (130) configured to brake the rotations of the front wheel (116) or the rear wheel (125).

3. The bicycle of claim 1, wherein the driving part (110) includes a bracket (111) disposed at both sides of the base (101), wherein the bracket (111) includes chain rings (113) and (144) which are configured to rotate in cooperation with driving cranks (112) and (141); and sprockets (115) and (146) which are disposed at the front wheel (116) or the rear wheel (125) and are connected to the chain rings (113) and (144) via a chain (114) and are configured to rotate in cooperation with the chain rings (113) and (144).

4. The bicycle of claim 1, wherein the steering part (120) includes a steering footrest (121) which is engaged to the front wheel (116) or the rear wheel (125), so the steering shafts (118) and (124) can be rotated by stepping on the steering footrests (121).

5. The bicycle of claim 1, wherein the steering part (120) is configured in such a way that the bracket (111) wherein the driving crank (112) configured to drive the front wheel (116) or the rear wheel (125) is installed, is engaged to both side ends of the steering frame (117), and the steering shaft (118) formed in the center of the steering frame (117) is hinged at the base (101).

6. The bicycle of claim 1, further comprising an upper body bench (104) disposed at the top of the base (101) to support a rider's upper body, wherein the height of the upper body bench (104)is adjustable; and a lower body bench (106) configured to support a rider's lower body, wherein the height of the lower body bench (106) is adjustable.

7. The bicycle of claim 6, wherein the lower body bench (106) is configured to be gradually more inclined in the direction of the rear side of the base (101).

8. The bicycle of claim 2, wherein the braking part (130) includes a brake handle (131) which protrudes upward from a front portion of the base (101) and is equipped with a brake lever, wherein the brake lever is connected to the wire with a brake (132) configured to brake in such a way to press and brake the front wheel (116) or the rear wheel (125), and if the brake lever is pulled, the brake (132) brakes in such a way to press and brake the front wheel (116) or the rear wheel (125).

9. The bicycle of claim 8, wherein the braking part (130) is configured in such a way that the brake handle (131) equipped with the brake lever is disposed in the form of one paid, and the brake lever of any one of the brake handles (131) is connected via a wire with the brake (132) which is able to press and brake the front wheel (116), and the brake lever of the other brake handle (131) is connected wire with the brake (133) which is able to press and brake the rear wheel (125).
